(19) Europäisches Patentamt
European Patent Office
Office européen des brevets

(11) Numéro de publication: **0 050 071**
**B1**

(12) **FASCICULE DE BREVET EUROPEEN**

(45) Date de publication du fascicule du brevet: **13.02.85**

(51) Int. Cl.[4]: **C 08 K 5/00,** C 08 L 27/00

(21) Numéro de dépôt: **81401512.9**

(22) Date de dépôt: **30.09.81**

(54) **Procédé pour rendre des polymères résistants aux radiations ionisantes, et compositions obtenues.**

(30) Priorité: **13.10.80 FR 8021816**

(43) Date de publication de la demande:
**21.04.82 Bulletin 82/16**

(45) Mention de la délivrance du brevet:
**13.02.85 Bulletin 85/07**

(84) Etats contractants désignés:
**AT CH DE GB LI NL SE**

(56) Documents cités:
**EP-A-0 018 045**
**DE-B-1 217 609**
**GB-A-2 008 596**

**PATENTS ABSTRACTS OF JAPAN, volume 2, no. 76, 16 juin 1978 page 940C78**
**KURT THINIUS "Stabilisierung und Alterung von Plastwerkstoffen" volume 1, 1969 AKADEMIE VERLAG BERLIN (DE) chapitre 5-2-7-3, pages 282-285**
**PATENTS ABSTRACTS OF JAPAN, volume 5, no. 49, 8 avril 1981, colonne 721C49**

(73) Titulaire: **ATO CHIMIE, Société Anonyme dite:**
**La Défense 5 12/16 Allée des Vosges**
**F-92400 Courbevoie (FR)**

(72) Inventeur: **Kornbaum, Simon**
**212, rue Benjamin Delessert**
**F-69300 Caluire (FR)**
Inventeur: **Chenard, Jean-Yves**
**19 bis rue Bernes Cambot**
**F-64000 Pau (FR)**

(74) Mandataire: **Kohn, Armand**
**5 Avenue Foch**
**F-92380 Garches (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 050 071 B1

**Description**

L'invention concerne un procédé permettant de rendre résistants aux rayonnements ionisants différents polymères dont la macromolécule contient de l'halogène; elle comprend les polymères ainsi stabilisés et les compositions les renfermant.

Dans les applications de matières plastiques où celles-ci ont à subir l'action de rayons ionisants, notamment rayons X, γ, β ou autres, des altérations plus ou moins marquées de la matière sont à craindre du fait de cette action; des résines dites halogénées, en particulier halogéno-vinyliques ou vinylidéniques, sont vulnérables dans ces conditions; elles supportent mal ces rayonnements, ce qui se manifeste par une coloration anormale de la résine. C'est un inconvénient d'autant plus regrettable que des polymères halogéno-vinyliques, et spécialement le chlorure de polyvinyle, présentent un intérêt technologique et économique considérable.

In apparait que, jusqu'à présent, seuls certains plastifiants auraient permis d'améliorer la tenue du chlorure de polyvinyle vis-à-vis des rayons γ. Ainsi relate-t-on, dans Chem. Abstr. vol. 61 (1964), 3263h, les publications de Tadashi Kimura (Osaka Munic. Tech. Res. Inst., Japon), d'après lesquelles des plastifiants du type phosphates, le sébaçate ou le phtalate de bis(éthyl-2 hexyle) donnent des résultats favorables à ce point de vue. Cependant, dans la pratique, on est souvent amené à soumettre au rayonnement ionisant une résine qui ne doit pas contenir de plastifiant. Un cas important est celui de la stérilisation de produits ou denrées contenus dans des flacons ou autres emballages en chlorure de polyvinyle: d'une part la bonne tenue mécanique des emballages exige une rigidité suffisante, donc absence de plastifiant; d'autre part, les plastifiants risquent de contaminer le produit emballé, ce qui se traduirait, en particulier, par un danger sanitaire pour des produits alimentaires, cosmétiques, hygiéniques ou pharmaceutiques.

La présente invention permet de traiter des résines renfermant de l'halogène par des rayonnements ionisants, avec des doses largement suffisantes à la stérilisation, sans que la résine subisse une altération, et cela tant en présence qu'en l'absence de plastifiant. En particulier, grâce à cette invention, il devient possible de stériliser différents produits, chargés dans des récipients en chlorure de polyvinyle non plastifié, avec des doses de rayons γ allant jusqu'aux environs de 3 Mrads, sans aucun dommage au polymère du récipient; ce polymère demeure d'ailleurs incolore ou faiblement jaunâtre, c'est-à-dire qu'il conserve pratiquement sa couleur initiale.

Le nouveau procédé suivant l'invention consiste à incorporer au polymère à la fois un stabilisant à base de composé métallique, un thiol et de l'hydroquinone. Il est surprenant que l'association de ces trois adjuvants rende la résine résistante aux rayonnements ionisants, alors qu'un tel résultat n'a pas pu être obtenu avec les additifs classiques, de composés métalliques, de thiols et -éventuellement-d'antioxygènes, largement employés jusqu'à présent pour la stabilisation de résines halogénées à la chaleur et à la lumière. On connait, par exemple, le procédé selon le brevet britannique 1 001 344, pour la stabilisation à la chaleur et à la lumière des homo- et co-polymères renfermant du chlore, dans lequel on ajoute à la résine un composé organique d'un métal notamment Mg, Ca, Zn, Cd, Ba, Al, Zn, Sn, etc., un composé organique contenant du soufre, et un antioxygène phénolique, aminé ou autre. Les antioxygènes phénoliques portent toujours des substituants qui créent un fort empêchement stérique autour de chacune des fonctions phénol présentes; c'est d'ailleurs une règle bien connue dans l'art, l'action antioxydante ne pouvant bien s'exercer qu'avec des —OH protégés par des substituants sur des carbones voisins, et encore préfère-t-on des substituants ramifiés. Un exemple typique est celui du di-tert-butyl-2,6 méthyl-4 phénol très employé dans diverses utilisations. Par contre il n'a jamais été question d'adjoindre à des stabilisants classiques un diphénol comme l'hydroquinone où les deux —OH sont stériquement tout-à-fait dégagés, donc contraires aux conceptions admises jusqu'à présent. D'autre part, les travaux de D. K. TAYLOR ont montré que l'hydroquinone contribue au dégagement de HCl du chlorure de polyvinyle.

Ainsi, le nouveau procédé, suivant l'invention, présente-t-il un aspect inattendu en ce qu'il conduit à la stabilisation aux/rayons ionisants, grâce à la présence de l'hydroquinone conjointement avec des stabilisants classiques, qui protègent seulement contre les effets de la chaleur, mais non contre ceux des rayonnements à haute énergie.

Le composé métallique, qui forme un des 3 adjuvants synergiques, suivant l'invention, peut être tout stabilisant métallique, connu en soi, par exemble un dérivé organique d'un ou de plusieurs métaux, notamment tels que Ca, Ba, Zn, Pb, Zn, Sb, etc. Les stabilisants à la chaleur stannique et antimoneux étant très employés à l'heure actuelle, à cause de leur efficacité, ils sont fort recommandables pour une forme d'exécution préférée de l'invention. Ainsi peut-on utiliser les composés du type:

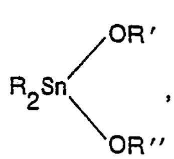 , 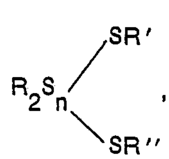 , 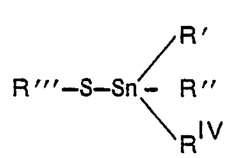

et corps similaires, dans lesquels les symboles R, R', R'', R''', $R^{IV}$ désignent différents groupes organiques et éventuellement inorganiques. Tels sont notamment les composés:

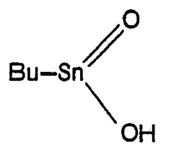 ; 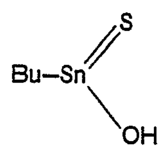 ; 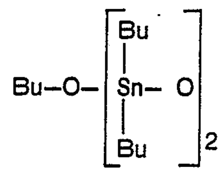 ;

$Bu_2Sn(OOC-C_{11}H_{23})_2$ ; 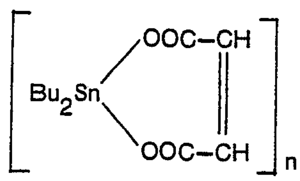 ;

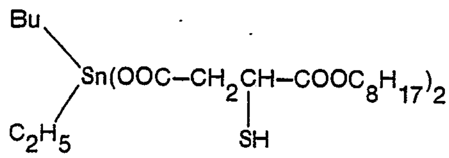 ; $(C_7H_{15})_2Sn(SC_8H_{17})_2$ ;

$Bu_2Sn(OOC-CH_2SH)_2$ ; $(C_{10}H_{21})_2Sn(OCH_3)_2$ ;

$(C_8H_{17})_2Sn(SCH_2-COOC_8H_{17})_2$ .

Les composés stanniques peuvent être remplacés ou accompagnés par des combinaisons équivalentes de l'antimoine.

Les proportions des stabilisants organo-métalliques peuvent être les mêmes que celles de la technique connue pour la stabilisation à la chaleur, c'est-à-dire généralement de 0,01 à 5% en poids de la résine, et le plus souvent de l'ordre de 0,5 à 2,5%. D'ailleurs, une façon pratique de réaliser l'invention consiste à se servir d'une résine prête à l'emploi, renfermant tous les additifs utiles, dont les stabilisants vis-à-vis de la chaleur, de la malaxer à chaud, à l'état semi-fondu, pour y incorporer l'hydroquinone et de mettre la résine en la forme voulue. Ainsi peut-on employer par exemple les compositions décrites dans la publication française n° 2 434 835, les brevets US 3 063 963, 3 507 827, 3 970 689 ou 2 914 506. Ces compositions subissent une altération nette dès que la dose de rayonnement dépasse $05.10^4$ Gray alors qu'elles supportent $1.10^4$ Gray et plus quand on leur a incorporé l'hydroquinone.

De ce qui précède, on voit que des thiols très divers peuvent être utilisés dans le cadre de l'invention; on préfère surtout des esters portant une fonction mercaptan dans leur reste d'acide ou dans celui d'alcool. Ces corps peuvent être représentés d'une façon générale par les formules

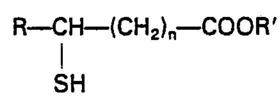 (1)

ou

$$R(CH_2)_m—COOR''SH \qquad (2)$$

où R est un groupe hydrocarboné en $C_1$ à $C_{20}$ ou bien hydrogène, R' est un alkyle ou alkényle en $C_1$ à $C_{18}$, m et n sont O ou des nombres entiers de 1 à 6, R'' étant un alkylène ou alkénylène en $C_1$ à $C_{18}$.

Il est avantageux d'employer des esters de formule (2) dans lesquels $R(CH_2)_m—$ est une chaîne aliphatique en $C_6$ à $C_{18}$, en particulier dérivé d'un corps gras, tandis que R'' est un alkyle ou alkényle inférieur, en $C_1$ à $C_4$.

De préférence, l'ester mercaptan est choisi parmi ceux dont la molécule renferme 1 groupe —SH pour 3 à 10 atomes de carbone, c'est-à-dire parmi ceux qui, selon la demande de brevet antérieure, n° 80 21662, de la Société, demanderesse ("Perfectionnement à la stérilisation d'objets en polymères halogéno-vinyliques par des rayonnements ionisants, et résines pour sa réalisation"), procurent eux-mêmes une amélioration de la résistance aux rayonnements ionisants, lorsqu'ils sont utilisés conjointement avec des

stabilisants classiques à la chaleur. Plus spécialement, dans une forme d'exécution de l'invention, particulièrement intéressante, l'ester mecaptan, incorporé à la résine, dérive d'un diacide carboxylique ou d'un polyol et porte deux groupes —SH, chacun à un des bouts opposés de la molécule. Ces esters mercaptans préférés peuvent être représentés par la formule générale:

$$HS—(CH_2)_n—Z—(CH_2)_m—Z—(CH_2)_n—SH \quad (3)$$

où Z désigne le groupe carboxy

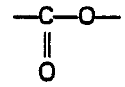

dont l'atome de C est lié à un atome de carbone des chaînes $(CH_2)_m$ ou de la chaîne $(CH_2)_m$. Le nombre entier n peut varier de 1 à 9 et m de 1 à 18, à la condition cependant que la somme 2n + m soit d'au moins 4.

Chacune de chaînes $—(CH_2)_n—$ et $—(CH_2)_m—$ peut d'ailleurs porter des substituants; des groupes —OH ou —SH y sont fort utiles.

De ce qui précède on voit que les fonctions mercaptan —SH peuvent se trouver dans le reste d'acide ou/et dans le reste d'alcool de l'ester; en effet, l'ester de formule (1) peut provenir de l'estérification d'un
—polyol $HO(CH_2)_mOH$ par 2 moles d'acide $HS(CH_2)_nCOOH$ ou bien d'un
—diacide $HOOC(CH_2)_mCOOH$ par 2 moles d'un thiol-alcool $HS(CH_2)_nOH$
chacun de ces alcools et acides pouvant porter d'autres groupes —OH ou/et —SH;

En tant qu'exemples non limitatifs des composés, répondant à la formule (3) suivant l'invention, peuvent servir les corps suivants:

Rapport SH/C

bis(mercapto-acétate)d'éthylène glycol

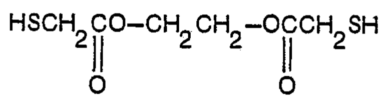

1/3

bis(mercapto-2 propionate)d'éthylène glycol

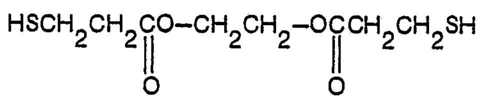

1/4

bis(mercapto-acétate)de glycéryle

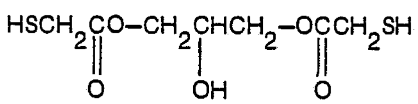

1/3,5

bis(mercapto-acétate)de diéthylène-glycol

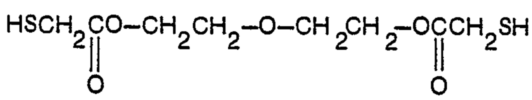

1/4

bis(mercapto-3-butyrate)de butane diol-2,3

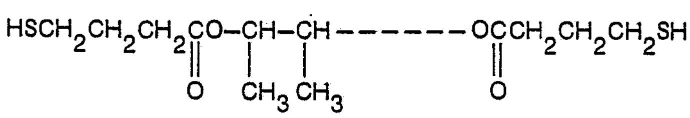

1/6

bis(mercapto-2 propionate) de pentaérythrityle

Rapport SH /C

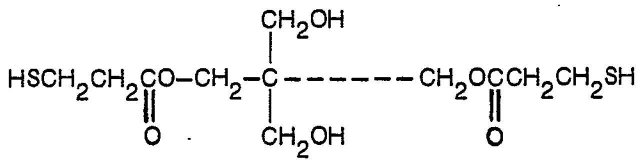

1/5,5

tris(mercapto-2 propionate) de pentaérythrityle

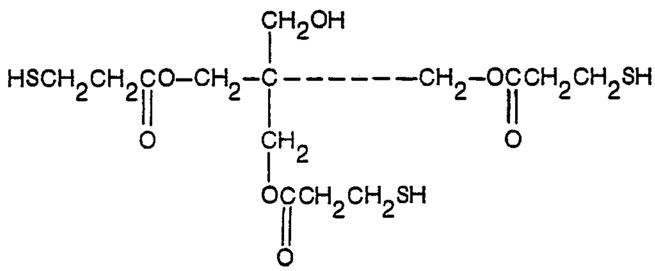

1/4,66

bis(mercapto-7 caprylate) de pentanediol 2,4-thiol 3

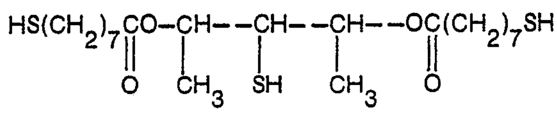

1/7

malonate de di(mercapto-3 propyle)

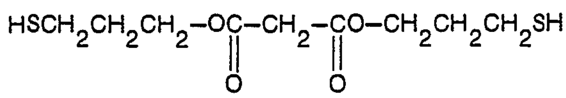

1/4,5

succinate de di(mercapto-4 butyle)

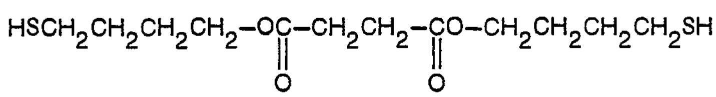

1/6

hydroxy-succinate de di(mercapto-2 éthyle)

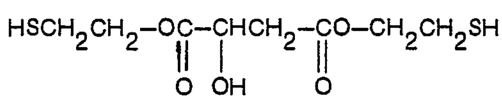

1/4

hydroxy-succinate de di(mercapto-6 hexyle)

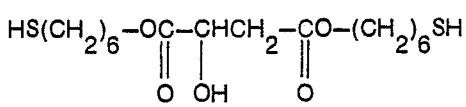

1/8

glutarate de di(mercapto-7 heptyle)

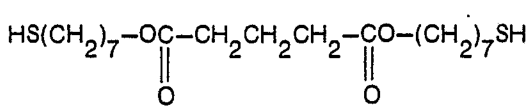

1/9,5

adipate de di(mercapto-2 éthyle)

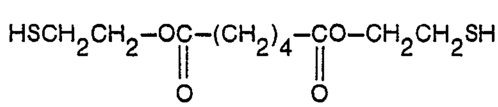

1/5

| | Rapport SH /C |
|---|---|
| Subérate de di(mercapto-2 ethyle) | |
| $HSCH_2CH_2{-}O\underset{\underset{O}{\|}}{C}{-}(CH_2)_6{-}\underset{\underset{O}{\|}}{C}O{-}CH_2CH_2SH$ | 1/6 |
| sebaçate de di (mercapto-3 propyle) | |
| $HSCH_2CH_2CH_2{-}O\underset{\underset{O}{\|}}{C}{-}(CH_2)_8{-}\underset{\underset{O}{\|}}{C}O{-}CH_2CH_2CH_2SH$ | 1/8 |

L'adjonction des composés susindiqués conjointement avec un stabilisant stannique permet de stériliser des objets en chlorure de polyvinyle avec des doses de rayons gamma dépassant $2.10^4$Gray, alors qu'on ne peut guère dépasser $0{,}5.10^4$Gray avec du stéarate de mercapto-2 éthyle connu (brevet français n° 2 434 835) comme un excellent stabilisant vis-à-vis de la chaleur, lorsqu'il est utilisé conjointement avec des organo-stanniques. Or l'addition de l'hydroquinone, suivant la présente invention, permet d'utiliser des doses de l'ordre de 2,7 au lieu de $2.10^4$Gray dans le premier, et environ 1 au lieu de $0{,}5.10^4$Gray dans le second de ces cas.

Les proportions des mercaptans à ajouter au polymère, conjointement avec l'hydroquinone, sont généralement du même ordre que celles du stabilisant métallique, en particulier stannique ou antimoneux; elles se rangent de préférence entre 0,1 et 6% en poids, suivant la nature du polymère et celle du ou des mercaptans choisis, ainsi que selon la dose de rayonnement à utiliser. Dans ces limites, l'effet protecteur augmente avec la teneur en l'ester mercaptan. Pratiquement, les proportions recommandables sont de 0,5 à 5% et surtout de 2 à 4% du poids du polymère. Les concentrations en hydroquinone peuvent être moindres, notamment 0,1 à 3%, et généralement de 0,2 à 1%.

L'incorporation de ces adjuvants a lieu, à la manière connue par malaxage, à la température de fort ramollissement de la résine à traiter.

L'invention est illustrée non limitativement par les exemples donnés ci-après.

Exemples 1 à 7

Des essais d'irradiation avec des rayons gamma, émis par une source au cobalt 60, sont effectués sur une composition de chlorure de polyvinyle du type prévu pour le moulage de corps creux, notamment récipients, films et feuilles transparentes ou opaques. A cette composition, on incorpore différents esters mercaptans, avant l'irradiation, pour voir comment se comporteraient des flacons en cette matière, stérilisés aux rayons gamma. La résine est un chlorure de polyvinyle (PVC) d'indice de fluidité K=57, additionné des ingrédients suivants, selon la technique connue.

Pour 100 parties en poids de PVC elle contient:

0,9 partie d'additif de mise en oeuvre, un polyalkylacrylate vendu sous la dénomination "Paraloïd K 120 N" par la Société ROEHM & HAAS;

0,7 partie d'anticollant, copolymère sytrène-alkylacrylate, désigné par "Paraloïd K 175" du même producteur;

10 parties de renforçateur antichoc, terpolymère méthacrylate-butadiène-styrène, connu sous le nom de "Kane Ace—B 28 A" (Société KANEGAFUCHI au Japon);

1,5 partie de stabilisant à la chaleur:

di-n.octyl di(mercapto-acétate d'iso-octyl)étain

$$(n.C_8H_{17})_2Sn(SCH_2{-}\underset{\underset{O}{\|}}{C}O{-}i.C_8H_{17})_2$$

3 parties de co-stabilisant à la chaleur, le bis-β aminocrotonate de thio-éthylène glycol

$$CH_3\underset{\underset{NH_2}{|}}{C}{=}CH{-}\underset{\underset{O}{\|}}{C}S{-}CH_2CH_2{-}O\underset{\underset{O}{\|}}{C}{-}CH{=}\underset{\underset{NH_2}{|}}{C}CH_3$$

correspondant au produit commercial "Irgastab A 70" de la Société CIBA—GEIGY.

1,2 parties de lubrifiant, le monostéarate de glycéryle.

La composition est malaxée dans un mélangeur rapide Papenmeier jusqu'à ce que la température atteigne 100°C. A partir du mélange homogène, ainsi obtenu, on produit une série de plaquettes de 50 × 40 mm aux épaisseurs en cascade de 4 mm, 2 mm et 1 mm, par injection, au moyen de la machine Negri-Bossi type V7—8 F.AS. A d'autres portions, de la même composition, on incorpore, dans le mélangeur Papenmeier, les esters mercaptans suivant l'invention, et l'on prépare, pour chacun de ces esters, une série de plaquettes d'essai des dimensions susindiquées.

Les plaquettes sont ensuite soumises à l'action des radiations gamma fournies par une source de cobalt 60. Pour chaque série, les irradiations sont effectuées avec les doses de 0,46, 0,90 et $2{,}76.10^4$ Gray.

Toutes les plaquettes étant au départ pratiquement incolores, on observe les colorations aprés chaque irradiation.

Le table au ci-après récapitule les résultats de ces observations : les intensités de la coloration (jaunâtre ou rougeâtre) sont notées par des signes – ou + ;

– signifie que l'échantillon est resté pratiquement incolore;
+ indique une faible coloration;
++ indique une coloration nette;
+++ indique une coloration forte;
++++ indique une coloration très forte;

TABLEAU I

| Exemple No | adjuvants et leur % | Dose d'irradiation en $10^4$ Gray — Coloration 0,46 | 0,9 | 2,76 |
|---|---|---|---|---|
| 1 | Aucun | ++ | +++ | ++++ |
| 2 | Stéarate de mercapto-2 éthyle 3% | + | ++ | +++ |
| 3 | Stéarate de mercapto-2 éthyle 3% + Hydroquinone 0,5% | – | – | ++ |
| 4 | Adipate de di(mercapto-2 éthyle) 3% | – | – | ++ |
| 5 | Adipate de di(mercapto-2 éthyle) 3% + Hydroquinone 0,5% | – | – | + |
| 6 | Hydroquinone 0,5% | ++ | +++ | ++++ |
| 7 | Hydroquinone 1,0% | + | ++ | +++ |

La comparaison des exemples 2 et 3 avec 1 montre que, si le stéarate de mercapto-éthyle apporte une légère amélioration de la tenue aux rayons gamma (ex. 2), l'amélioration est remarquable après l'addition de l'hydroquinone.

L'adipate de di(mercapto-2 éthyle)-exemple 4-stabilise lui-même la résine aux rayons γ, comme indiqué dans la demande de brevet susmentionnée, no 80 21662; mais l'-adjonction d'hydroquinone le rend encore bien plus efficace, puisqu'alors le jaunissement de la résine ne commence qu'acec $2{,}76 \cdot 10^4$ Gray.

Exemples 8 à 14

Le même mode opératoire que dans les exemples précédents est appliqué au même chlorure de polyvinyle auquel on a incorporé 1,8% en poids de di-n.octyl di(mercapto-acétate d'isooctyl) étain, en tant que stabilisant à la chaleur, mais sans addition d'anticollant, de renforçateur antichoc, ni d'additif de mise en oeuvre. Dans les exemples 9 à 14 on a ajouté, en outre les mêmes proportions des mêmes mercaptans ou/et hydroquinone que respectivement dans les exemples 2 à 7.

Après les irradiations aux rayons gamma on a trouvé pour les échantillons 8 à 14 les mêmes résultats, respectifs que ceux qui ont été obtenus aux exemples 1 à 7.

Exemples 15 à 25

Les essais des exemples 8 à 14, sans autres adjuvants que le composé stannique et le mercaptan ou/et hydroquinone, sont répétés, mais le stabilisant stannique employé est le maléate de dibutyl-étain.

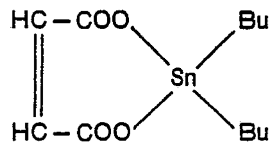

à raison de 2% à la place de celui des exemples précédents. Dans l'exemple 15 on n'ajoute aucun autre additif, tandis que dans les exemples 16 à 25 on introduit 2,5% d'un mercaptan dont la composition est précisée dans le Tableau II de résultats, ci-après, éventuellement accompagné d'hydroquinone.

TABLEAU II

| Exemple No | Ester mercaptan ajouté (2,5%) | Dose d'irradiation en $10^4$ Gray | | |
|---|---|---|---|---|
| | | 0,46 | 0,90 | 2,76 |
| | | Coloration | | |
| 15 | Aucun | ++ | +++ | ++++ |
| 16 | Bis (mercapto-acétate) d'éthylène glycol | – | – | + |
| 17 | Bis(mercapto-acétate) d'éthylène glycol + 0,5% d'hyquinone | – | – | – |
| 18 | Mercapto-acétate de stéaryle | + | ++ | +++ |
| 19 | Mercapto-acétate de stéaryle + 0,2% d'hydroquinone | – | – | + |
| 20 | Mercapto-acétate de stéaryle +0,6% d'hydroquinone | – | – | – |
| 21 | α-mercapto caprylate de butyle | – | + | ++ |
| 22 | α-mercapto caprylate de butyle +0,4% d'hydroquinone | – | – | + |
| 23 | α-mercapto caprylate de butyle +0,8% d'hydroquinone | – | – | – |
| 24 | α-mercapto-stéarate d'éthyle | + | ++ | +++ |
| 25 | α-mercapto-stéarate d'éthyle + 0,5% d'hydroquinone | – | – | + |

On voit que les essais no 17, 19, 20, 22 et 24, dans lesquels l'hydroquinone accompagne le mercaptan, apportent une bonne protection contre les effets des rayons γ; par contre les mercapto-esters no 18, 21, 24, connus comme bons stabilisants vis-à-vis de la chaleur, donnent des mauvais résultats en présence des rayons gamma, lorsqu'ils sont employés sans hydroquinone.

Exemples 26—31

Dans une série de mélanges de chlorure de polyvinyle avec 1,7% de composé stannique et 2,7% d'adipate de di(mercapto-2 éthyle), sans autres adjuvants, on fait varier la nature du composé stannique; les compositions obtenues sont soumises à l'irradiation, comme dans les exemples précédents.

Les stabilisants à l'étain essayés sont:

Exemple

26—Di-laurate de dibutyl-étain
27—Diméthyl di(mercapto-acétate de myristyle) étain
28—Dibutyl di(stéarate de mercapto-2 éthyle) étain

29—Monobutyl tri(mercapto-oléate d'éthyle) étain
30—Monobutyl mercapto-acétate d'isooctyl sulfure d'étain
31—Composé $BuO(SnBu_2O)_2Bu$

Dans tous les cas, la présence de 0,5% d'hydroquinone à côté de l'adipate de di(mercapto-2 éthyle) améliore la tenue aux rayons γ au même degré que dans l'exemple 5 (Tableau I plus haut).

Exemple 32

Dans les exemples 16 et 17, où l'ester mercaptan ajouté est le bis(mercapto-acétate) d'éthylène glycol, on remplace le stabilisant stannique par la même proportion de
n.octyl di(mercapto-acétate d'isooctyl) antimoine.
Les colorations après irradiation sont semblables à celles respectivement des exemples 16 et 17.

Exemple 33

On opère comme dans l'exemple 25, mais le stabilisant thermique à l'antimoine est le tri(mercapto-acétate d'isooctyl) antimoine. L'amélioration de la tenue aux rayons γ, apportée par le bis(mercapto-acétate) d'éthylène glycol et l'hydroquinone, est semblable à celle de l'exemple 17.

**Revendications**

1. Procédé pour empêcher l'altération d'un polymère dont la molécule renferme un halogène, sous l'effet d'un rayonnement ionisant, qui consiste à incorporer à ce polymère un stabilisant à la chaleur, à base de composé métallique, et un mercaptan, caractérisé en ce qu'on incorpore également de l'hydroquinone.

2. Procédé suivant la revendication 1, dans lequel la proportion de stabilisant à base de composé métallique est de 0,01 à 5%, et de préférence de 0,5 à 2,5% en poids du polymère, et celle de mercaptan de 0,1 à 6% de préférence 0,5 à 5% caractérisé en ce que la teneur en hydroquinone est de 0,1 à 3%, ou mieux de 0,2 à 1%, du poids du polymère.

3. Procédé suivant la revendication 1 ou 2, dans lequel la stabilisant à base de composé métallique, employé, est un composé organo-stannique ou organo-antimoneux, connu en soi.

4. Procédé suivant une des revendications 1 à 3, dans lequel le mercaptan, accompagnant le stabilisant à la chaleur, est un mercapto-ester dont l'utilisation avec les polymères est connue en soi.

5. Procédé suivant une des revendications 1 à 4 dans lequel le mercaptan choisi est un mercapto-ester dont le groupe —SH est porté par le reste d'acide ou par celui d'alcool, caractérisé en ce qu'il renferme 1 groupe SH pour 3 à 10 atomes de carbone.

6. Procédé suivant une des revendications 1 à 4, dans lequel le mecaptan choisi est un mercapto-ester, caractérisé en ce que l'ester mercaptan incorporé est un dithiol, dont les deux groupes —SH se trouvent aux bouts opposés de la châne formant sa molécule.

7. Procédé suivant la revendication 6, caractérisé en ce que l'ester mercaptan incorporé présente la structure $HS(CH_2)_n—Z—(CH_2)_m—Z—(CH_2)_nSH$ où Z désigne le groupe carboxy

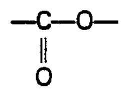

dont l'atome de C est lié à un carbone des chaînes $—(CH_2)_n—$ ou de la chaîne $—(CH_2)_m—$; n est un nombre entier de 1 à 9 et m de 1 à 18, la somme 2n+m étant d'au moins 4.

8. Procédé suivant la revendication 3, caractérisé en ce que l'ester mercaptan est un diester de 2 moles d'un mercaptoacide carboxylique avec 1 mole de polyol, en particulier un glycol ou le glycérol pouvant porter des substituants.

9. Application du procédé suivant une des revendications 1 à 8, à la stabilisation vis-à-vis des rayonnements ionisants, d'un polymère halogénovinylique, en particulier du chlorure de polyvinyle.

10. Composition de polymère dont la molécule contient un halogène, en particulier polymère halogèno-vinylique, renfermant un stabilisant à la chaleur, à base de composé métallique, et un mercaptan, caractérisé en ce qu'elle contient également de l'hydroquinone.

**Patentansprüche**

1. Verfahren zur Verhinderung der Veränderung eines Polymeren, dessen Molekül ein Halogen enthält, unter der Einwirkung von ionisierender Strahlung, durch Einarbeiten eines Wärmestabilisierungsmittels auf Metallverbindungs-Basis und eines Mercaptans in dieses Polymere, dadurch gekennzeichnet, dass man auch Hydrochinon einarbeitet.

2. Verfahren nach Anspruch 1, bei dem der Anteil des Stabilisierungsmittels auf Metallverbindungs-Basis von 0,01 bis 5% und vorzugsweise von 0,5 bis 2,5%, bezogen auf das Gewicht des Polymeren, beträgt und der des Mercaptans von 0,1 bis 6%, vorzugsweise 0,5 bis 5%, dadurch gekennzeichnet, dass der Gehalt an Hydrochinon 0,1 bis 3% oder besser 0,2 bis 1% des Gewichts des Polymeren beträgt.

3. Verfahren nach Anspruch 1 oder 2, bei dem das verwendete Stabilisierungsmittel auf Metallverbindungs-Basis eine an sich bekannte Organo-Zinn-IV- oder Organo-Antimon-III-Verbindung ist.

4. Verfahren nach einem der Ansprüche 1 bis 3, bei dem das Mercaptan, das das Wärmestablisierungsmittel begleitet, ein Mercaptoester ist, dessen Verwendung mit den Polymeren an sich bekannt ist.

5. Verfahren nach einem der Ansprüche 1 bis 4, bei dem das gewählte Mercaptan ein Mercaptoester ist, dessen Gruppe —SH von dem Säurerest oder von dem des Alkohols getragen wird, dadurch gekennzeichnet, dass er 1 Gruppe —SH pro 3 bis 10 Kohlenstoffatome enthält.

6. Verfahren nach einem der Ansprüche 1 bis 4, bei dem das gewählte Mercaptan ein Mercaptoester ist, dadurch gekennzeichnet, dass der eingearbeitete Mercaptanester ein Dithiol ist, dessen beide Gruppen —SH sich an den entgegengesetzten Enden der sein Molekül bildenden Kette befinden.

7. Verfahren nach Anspruch 6, dadurch gekennzeichnet, dass der eingearbeitete Mercaptanester die Struktur $HS(CH_2)_m—Z—(CH_2)_m—Z—(CH_2)_nSH$ hat, worin Z die Carboxygruppe

$$-\underset{\underset{O}{\|}}{C}-O-,$$

deren C-Atom an einen Kohlenstoff der Ketten $—(CH_2)_n—$ oder der Kette $—(CH_2)_m—$ gebunden ist, bedeutet; n eine ganze Zahl von 1 bis 9 ist und m von 1 bis 18, wobei die Summe 2n+m zumindest 4 ist.

8. Verfahren nach Anspruch 3, dadurch gekennzeichnet, dass der Mercaptanester ein Diester von 2 Mol einer Mercaptocarbonsäure mit 1 Mol Polyol, insbesondere einem Glykol oder Glycerin, das Substituenten tragen kann, ist.

9. Verwendung des Verfahrens gemäss einem der Ansprüche 1 bis 8 zur Stabilisierung eines Halogenvinylpolymeren, insbesondere von Polyvinylchlorid gegen ionische Strahlung.

10. Polymerzusammensetzung, deren Molekül ein Halogen enthält, insbesondere Halogenvinylpolymeres, enthaltend ein Wärmestabilisierungsmittel auf Metallverbindungs-Basis und ein Mercaptan, dadurch gekennzeichnet, dass sie auch Hydrochinon enthält.

**Claims**

1. Process for preventing the alteration of a polymer the molecule of which contains a halogen under the action of ionising radiation, which consists of incorporating in the polymer a mercaptan and a thermal stabiliser comprising a metal compound, characterised in that hydroquinone is also incorporated.

2. Process according to claim 1, in which the proportion of stabiliser comprising a metal compound is from 0.01 to 5%, and preferably from 0.5 to 2.5%, by weight of polymer, and that of mercaptan is from 0.1 to 6% and preferably 0.5 to 5%, characterised in that the hydroquinone content is from 0.1 to 3%, or better from 0.2 to 1% by weight of polymer.

3. Process according to claim 1 or 2, in which the stabiliser based on a metal compound employed is an organo-tin or an organo-antimony compound, known per se.

4. Process according to any of claims 1 to 3, in which the mercaptan accompanying the heat stabiliser is a mercapto-ester, the use of which with polymers is known per se.

5. Process according to any of claims 1 to 4, in which the mercaptan chosen is a mercapto-ester, the —SH group of which is carried by the acid residue or the alcohol residue, characterised in that it contains one—SH group per 3 to 10 carbon atoms.

6. Process according to any of claims 1 to 4, in which the mercaptan chosen is a mercapto-ester, characterised in that the mercapto-ester incorporated is a dithiol, the two—SH groups of which are located at opposite ends of the chain forming the molecule.

7. Process according to claim 6, characterised in that the mercapto-ester incorporated has the structure $HS(CH_2)_n—Z—(CH_2)_m—Z—(CH_2)_nSH$ where Z designates the carboxy group,

$$-\underset{\underset{O}{\|}}{C}-O-,$$

the atom C of which is connected to a carbon atom of the $—(CH_2)_n—$ chains or the $—(CH_2)_m—$ chain; n is a whole number from 1 to 9 and m from 1 to 18, the sum $2n \pm m$ being at least 4.

8. Process according to claim 3, characterised in that the mercapto-ester is a diester comprising 2 moles of a carboxylic mercapto acid with 1 mole of a polyol, in particular a glycol or glycerol possibly carrying substituents.

9. Application of the process according to any of claims 1 to 8 to the stabilisation to ionising radiation of a halogenovinyl polymer, in particular polyvinyl chloride.

10. Polymer composition of which the molecule contains a halogen, in particular a halogenovinyl polymer containing a mercaptan, and a thermal stabiliser comprising a metal compound, characterised in that it also contains hydroquinone.